# FASCICULE DE BREVET EUROPEEN

(11) **EP 3 646 505 B1**
(45) Date de publication et mention de la délivrance du brevet: **06.03.2024**
(21) Numéro de dépôt: 18749016.4
(22) Date de dépôt: 27.06.2018
(51) Int. Cl.: H04L 1/1829, H04L 1/1867, H04L 1/1812, H04L 5/00

(54) **PROCÉDÉ DE TRANSMISSION DE DONNÉES ET DE RETRANSMISSION HARQ**
VERFAHREN ZUR DATENÜBERTRAGUNG UND HARQ-NEUÜBERTRAGUNG
METHOD FOR DATA TRANSMISSION AND HARQ RETRANSMISSION

(30) Priorité: 27.06.2017 FR 1755887
(43) Date de publication de la demande: 06.05.2020
(73) Titulaire: Orange, 92130 Issy-les-Moulineaux (FR)
(72) Inventeur: LIN, Hao, 92326 Châtillon Cedex (FR)
(86) Numéro de dépôt international: PCT/FR2018/051568
(87) Numéro de publication internationale: WO 2019/002760

(56) Documents cités:
- WO-A1-2017/166373
- US-A1- 2009 147 688
- US-A1- 2010 309 863

## Description

La présente invention se rapporte au domaine des télécommunications. Au sein de ce domaine, l'invention se rapporte plus particulièrement aux protocoles lors de transmissions entre des équipements et une station de base.

L'invention trouve notamment des applications dans le domaine des communications sans fil et en particulier et sans être limitatif, dans le domaine des communications dites mMTC (acronyme des termes anglosaxons « massive Machine Type Communications »).

Ce type de communications fait référence à un contexte de déploiement massif de dispositifs dans une zone couverte par une station de base, ces dispositifs étant capables de transmettre des données vers la station de base. Dans ce contexte les transmissions des différents équipements peuvent intervenir de manière sporadique.

Il est en effet prévu dans les années à venir une densification des réseaux de capteurs qui ont pour rôle de remonter des données vers une entité d'exploitation de ces données. On peut déjà citer les réseaux existants de caméras de vidéo-surveillance qui remontent des données vidéo. Il y a d'autres réseaux en cours de déploiement dans des domaines très variés tels que l'énergie avec la remontée de données de consommation de gaz ou d'électricité et tels que la santé avec la remontée de données physiologiques de patients. Il y a donc une augmentation prévisible de transmissions sporadiques d'informations qui transiteront par un même lien physique qui sera souvent un lien radio.

### Art antérieur

Les systèmes de futures générations (5G, etc.) font l'objet de travaux au sein du 3GPP pour définir des règles pour qu'une station de base soit en mesure de recevoir simultanément des communications provenant de terminaux mobiles qui exigent une connectivité presque permanente avec un haut voire très haut débit (plusieurs Mega bits/s) et des communications sporadiques provenant de capteurs.

Les transmissions issues des capteurs ont en outre la particularité d'être bas débit (quelques bits/s, environ 20 octets par jour), de caractère aléatoire et ponctuel.

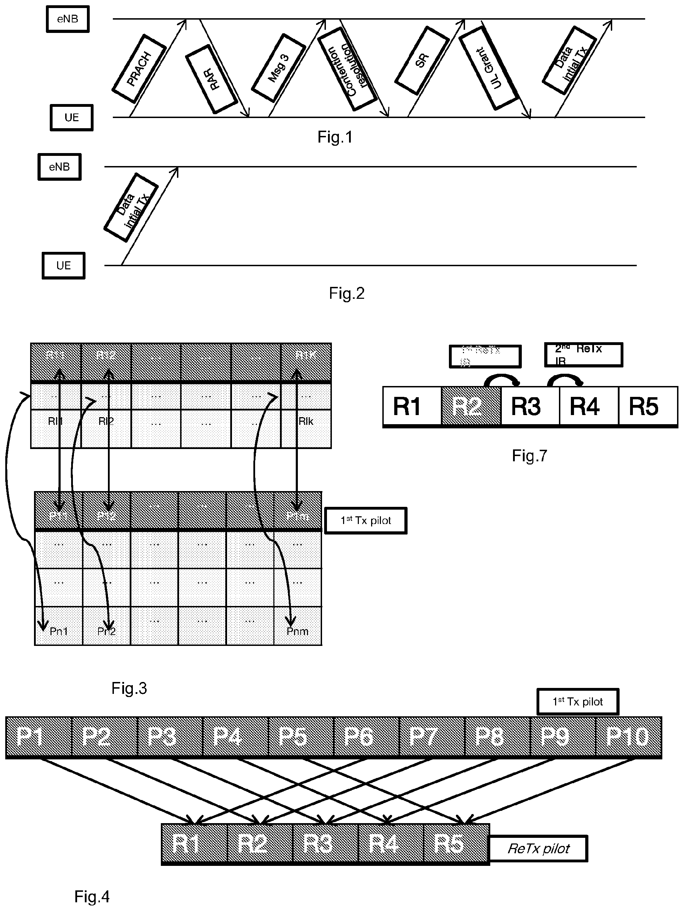

Les normes dites LTE éditées par le 3GPP spécifient des procédé d'émission et de réémission lorsque le récepteur n'arrive pas à détecter ou décoder correctement les données émises par un émetteur. Il y a ainsi un protocole dit de hand-shake illustré par la figure 1. L'équipement de l'utilisateur UE fait une requête d'autorisation de transmission vers la station de base eNB en émettant un préambule au moyen d'un canal PRACH de signalisation. Quand la station de base eNB a identifié avec succès le préambule, elle répond par un signal RAR (Random Access Response). A réception, l'équipement de l'utilisateur UE envoie un signal d'authentification Msg 3. En cas de succès de détection, la station de base eNB répond par un signal « Contention resolution ». A réception, l'équipement de l'utilisateur UE envoie un signal de cadencement SR (Scheduling Request) et attend l'autorisation de la station de base. L'équipement de l'utilisateur UE n'est autorisé à transmettre qu'après que la station de base eNB lui a envoyé le signal UL Grant. Lorsqu'il est autorisé, l'équipement de l'utilisateur commence sa transmission Data initial Tx.

Ce protocole d'accord peut fournir une qualité de service stable adaptée à des communications cellulaires de haut débit dites eMBB (acronyme des termes anglosaxons « enhanced Mobile Broadband Communications ») qui requièrent un débit de données élevé avec un nombre modéré d'utilisateurs actifs et peu de contraintes de latence.

Ce protocole d'accord (hand-shake) introduit une latence de transmission importante puisque chaque transmission en voie montante doit suivre ce protocole d'accord. Il nécessite en outre un nombre important de signaux de signalisation en voie montante. Ces contraintes sont jugés très couteuses pour un dispositif mMTC qui peut avoir de faibles capacités tant en terme de puissance électrique, que de puissance de calcul.

Un nouveau type de protocole est évoqué pour ce type de communications, il s'agit du protocole de transmission dit d'accord libre GF (« Grant-Free transmission» selon la terminologie anglosaxonne). Selon ce protocole, un utilisateur transmet ses données vers la station de base dès que ses données sont prêtes à être émises sans attendre une autorisation ni la demander comme illustré par la figure 2.

Le document US 2009/147688 divulgue l'utilisation de trois listes et plus pour distinguer des retransmissions.

### Caractéristiques principales de l'invention

La présente invention propose un procédé de télécommunication selon la revendication 1, entre une station de base et des utilisateurs comprenant :
- identification de deux listes disjointes de pilotes dont une première pour des transmissions initiales en voie montante et une deuxième pour des retransmissions en voie montante,
- définition d'un premier mappage entre les pilotes des deux listes.

Le procédé comprend en outre la définition de premiers motifs différents définissant un premier niveau de correspondance entre des pilotes de la deuxième liste pour distinguer respectivement des modes de retransmission différents.

Selon un mode particulier de réalisation, un des modes est un mode HARQ avec redondance incrémentale..

Selon un mode particulier de réalisation, un des modes est un mode HARQ avec répétition.

Selon un mode particulier de réalisation, au moins deux retransmissions sont définies pour une même transmission. Selon ce mode, le procédé comprend en outre un second motif définissant un second niveau de correspondance entre des pilotes de la deuxième liste.

En outre, l'invention a pour objet une station de base adaptée selon la revendication 5, pour mettre en oeuvre un procédé de télécommunication comprenant un émetteur et un récepteur reliés à une antenne, un microprocesseur et une mémoire. La station de base est telle que :
- la mémoire est adaptée pour mémoriser deux listes disjointes de pilotes dont une première pour des transmissions initiales en voie montante et une deuxième pour des retransmissions en voie montante et pour mémoriser un premier mappage entre les pilotes des deux listes,
- le microprocesseur est adapté pour comparer un pilote fourni par le récepteur après réception de données reçues par l'antenne avec les listes de pilotes mémorisées pour déterminer s'il les données reçues correspondent à une transmission initiale ou une retransmission.

En outre, l'invention a pour objet un équipement utilisateur selon la revendication 6, adapté pour mettre en oeuvre un procédé de télécommunication comprenant un émetteur et un récepteur reliés à une antenne, un microprocesseur et une mémoire. L'équipement est tel que :
- la mémoire est adaptée pour mémoriser deux listes disjointes de pilotes dont une première pour des transmissions initiales en voie montante et une deuxième pour des retransmissions en voie montante et pour mémoriser un premier mappage entre les pilotes des deux listes,
- le microprocesseur est adapté pour déterminer un premier pilote parmi la première liste de pilotes mémorisée et pour contrôler l'émetteur pour transmettre un paquet de données comprenant le pilote et
- le microprocesseur est adapté pour attendre un signal d'acquiescement pendant une durée déterminée avant de contrôler l'émetteur pour une retransmission.

### Liste des figures

D'autres caractéristiques et avantages de l'invention apparaîtront lors de la description qui suit faite en regard des figures annexées données à titre d'exemple non limitatif.
La figure 1 est un schéma du protocole HS dit hand-shake.
La figure 2 est un schéma du protocole GF dit Grant-Free.
La figure 3 représente deux listes de pilotes avec l'identification d'un mapping entre les deux listes selon une première caractéristique du procédé de transmission selon l'invention.
La figure 4 représente un exemple de mapping de type circulaire et séquentiel entre les deux listes de pilotes.
La figure 5 est un schéma du mode HARQ avec répétition CC.
La figure 6 est un schéma du mode HARQ avec redondance incrémentale IR.
La figure 7 est un schéma d'un exemple de motif pour un mode retransmission avec redondance incrémentale IR.
La figure 8 est un schéma d'un exemple d'utilisation de pilote.
Les figures 9 et 10 sont des schémas illustrant le déroulement du procédé selon l'invention.
Les figures 11 et 12 sont des organigrammes du déroulement du procédé au niveau de l'utilisateur et au niveau de la station de base.
La figure 13 est un schéma de la structure simplifiée d'un équipement d'utilisateur.
La figure 14 est un schéma de la structure simplifiée d'une station de base.

### Description de modes de réalisation particuliers

Le contexte de l'invention est celui selon lequel la station de base eNB connaît la liste des utilisateurs UE susceptibles de communiquer avec elle selon un procédé de transmission d'accord libre GF ainsi que leur identifiant UE ID. Selon ce contexte, toute transmission est en outre conforme au format selon lequel les données transmises comprennent un champ de vérification de données transmises, par exemple de type CRC (Cyclic Redundant Check) déclenchant un acquiescement ACK en retour en cas de décodage correcte des données. Ce champ permet de contrôler que les données sont transmises sans erreur et qu'en particulier l'identifiant UE ID de l'émetteur inclus dans les données est correct. En outre selon ce format, toute transmission par un UE comprend un pilote.

En outre, selon ce contexte, une grille de ressources temps fréquence dédiées à un accès d'accord libre GF est identifiée et le système de télécommunication est configuré en conséquence. La station de base connaît ainsi les ressources fréquentielles et temporelles, selon la terminologie du LTE les ressources blocs, dédiées à une transmission GF. Un cadencement entre la transmission d'un utilisateur et la transmission d'un signal d'acquiescement ACK émis par la station de base dans le cas du décodage correct des données reçues est en outre déterminé par ce contexte.

Selon une première caractéristique du procédé de transmission illustrée par la figure 3, le procédé identifie deux listes (P11, P12,..., P1m,..., Pn1, Pn2,..., Pnm), (R11, R12,..., R1K,..., Rl1, Rl2,..., RlK) disjointes de pilotes. Une première liste (P11, P12,..., P1m,..., Pn1, Pn2,..., Pnm) de pilotes est dédiée aux transmissions initiales en voie montante. La seconde liste (R11, R12,..., R1K,..., Rl1, Rl2,..., RlK) de pilotes est dédiée aux retransmissions en voie montante qui succèdent aux transmissions initiales. Ces deux listes peuvent être de même taille ou de taille différente. Ces listes sont connues des UE et de la station de base eNB.

Le nombre de pilotes de la première liste est toutefois en nombre suffisant pour que chaque UE de la liste des utilisateurs puisse sélectionner un pilote différent de celui utilisé par un autre UE de cette liste. Cette sélection peut être effectuée de manière aléatoire. Ainsi, la station de base eNB connaît après réception des pilotes de la première liste, le nombre d'utilisateurs UE actifs.

Selon une deuxième caractéristique du procédé de transmission illustrée par la figure 3, le procédé définit un premier mappage entre les pilotes des deux listes. Chaque pilote de la première liste est mappé avec un pilote de la deuxième liste dit pilote de référence *ReTx pilot* pour les retransmissions. Un pilote de la deuxième liste peut éventuellement être mappé avec plusieurs pilotes de la première liste si les listes n'ont pas le même nombre de pilotes.

La figure 4 représente un exemple de mapping de type circulaire et séquentiel entre les deux listes de pilotes.

Un utilisateur qui effectue une réémission GF doit utiliser un des pilotes de la deuxième liste. La sélection de ce pilote n'est plus aléatoire comme pour la première liste. Le pilote sélectionné dans la deuxième liste est celui mappé avec le pilote utilisé par l'utilisateur UE lors de la transmission initiale. Ainsi, la station de base eNB a un lien pour associer les données reçues lors d'une transmission initiale avec les données reçues lors d'une retransmission en consultant le mapping entre les deux listes de pilotes.

Si les deux listes sont de même taille, il n'y a pas d'ambiguïté lors de l'association. Par contre si un même pilote de la deuxième liste est en relation avec plusieurs pilotes de la première liste, l'association peut ne pas être déterminée avec certitude par la station de base eNB sur la base uniquement des pilotes utilisés lors de la première réémission. Cette indétermination n'intervient que si lors des transmissions initiales deux utilisateurs ont utilisés les pilotes en correspondance avec un même pilote de la deuxième liste. Ce cas doit avoir une faible probabilité.

Selon une troisième caractéristique du procédé de transmission, la transmission initiale est suivie d'une retransmission qui peut être effectuée selon différents modes.

L'invention vise en particulier à adapter un protocole HARQ qui est un protocole de retransmission qui se déroule au niveau des couches physiques à un accès au canal d'accord libre. Les différents modes sont par exemple, un mode de retransmission avec répétition CC (Chase combining HARQ) ou un mode de réémission avec redondance incrémentale IR (Incremental Redundancy HARQ).

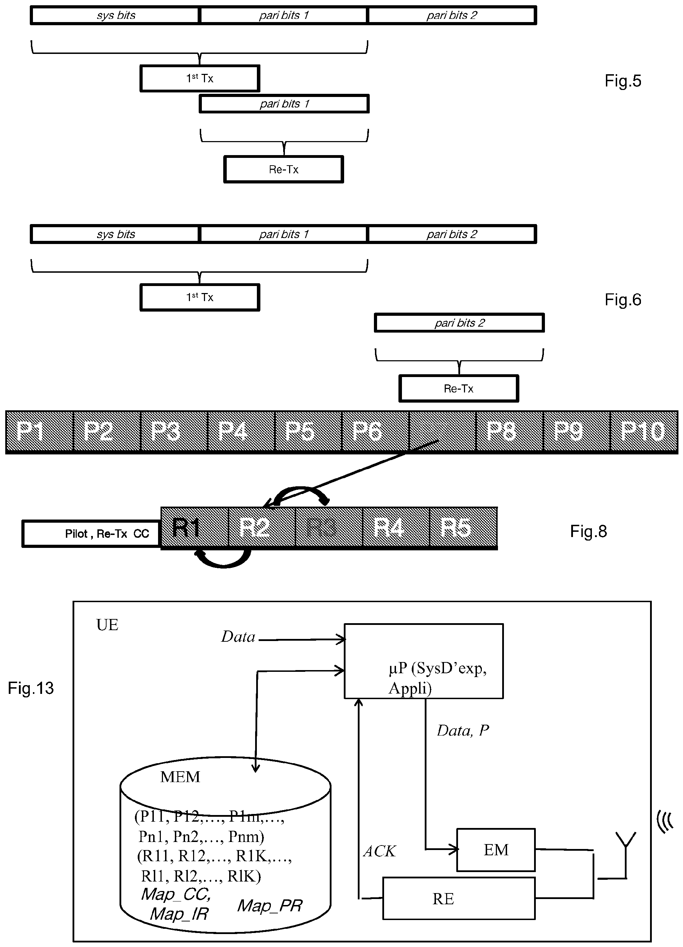

Le mode HARQ avec répétition CC est illustré par la figure 5. Selon ce mode, la retransmission porte sur des données transmises pendant la transmission initiale 1^{st} Tx : il s'agit donc d'une répétition d'une partie de données déjà transmise. Selon l'exemple illustré par la figure 5, les bits de parité *pari bits 1* accompagnent les bits systématiques *sys bits* transmis lors de la transmission initiale 1^{st} Tx. Et les bits de parité *pari bits 1* sont répétés lors de la retransmission Re-Tx. En ne retransmettant que des données de redondance de la transmission initiale, le récepteur peut combiner de manière cohérente les données de redondance pour obtenir une augmentation du SNR. Cette combinaison consiste schématiquement en une addition bit à bit et une division par deux. Le rendement de codage après une retransmission à répétition CC est constant compte tenu qu'il n'y a pas de nouvelles données de redondance lors de la retransmission.

Le mode HARQ avec redondance incrémentale IR est illustré par la figure 6. Selon ce mode, la retransmission Re-Tx porte sur des données non transmises pendant la transmission initiale : il ne s'agit donc pas d'une répétition d'une partie de données déjà transmise mais d'une transmission de nouvelles données. Le récepteur peut ainsi bénéficier d'un gain de codage plus robuste i.e. le rendement de codage diminue. Selon l'exemple illustré par la figure 6, les bits de parité *pari bits 1* accompagnent les bits systématiques *sys bits* transmis lors de la transmission initiale 1^{st} Tx. Et les bits de parité *pari bits 2* sont transmis lors de la retransmission Re-Tx.

Pour distinguer entre ces différents modes, le procédé identifie pour chaque mode un motif de relations entre le pilote de référence *ReTx pilot* et les autres pilotes de la deuxième liste. Les motifs sont différents entre eux pour distinguer les différents modes entre eux. Ces motifs peuvent être qualifiés de sous-niveaux de mapping.

Un exemple de motif pour un mode retransmission avec redondance incrémentale IR est illustré par la figure 7. Ce motif est selon l'exemple obtenu par un décalage à droite d'une position. Selon cet exemple, on suppose que le pilote de référence *ReTx pilot* pour les retransmissions est R2. Pour identifier qu'il s'agit d'un mode de retransmission avec redondance incrémentale IR, le pilote à utiliser lors de la première retransmission n'est pas le pilote R2 mais le pilote R3 selon le motif. Si une deuxième retransmission est effectuée alors elle doit utiliser le pilote R4 selon le motif. Et ainsi de suite si d'autres retransmissions suivent. Un exemple de motif pour un mode de retransmission avec répétition CC peut être obtenu avec un décalage à gauche d'une position à chaque niveau de retransmission.

Ainsi, en référence à la figure 8, si la transmission initiale utilise le pilote P7 de la première liste alors selon le mapping défini par la figure 4, le pilote de référence *ReTx pilot* pour les retransmissions est le pilote R2 de la deuxième liste. La station de base reçoit une transmission avec le pilote P7. Si la retransmission utilise le pilote R3 alors compte tenu des motifs des différents modes de retransmission, la station de base en déduit qu'il s'agit du mode avec redondance incrémentale IR. Par contre si la retransmission utilise le pilote R1 alors compte tenu des motifs des différents modes de retransmission, la station de base en déduit qu'il s'agit du mode avec répétition CC.

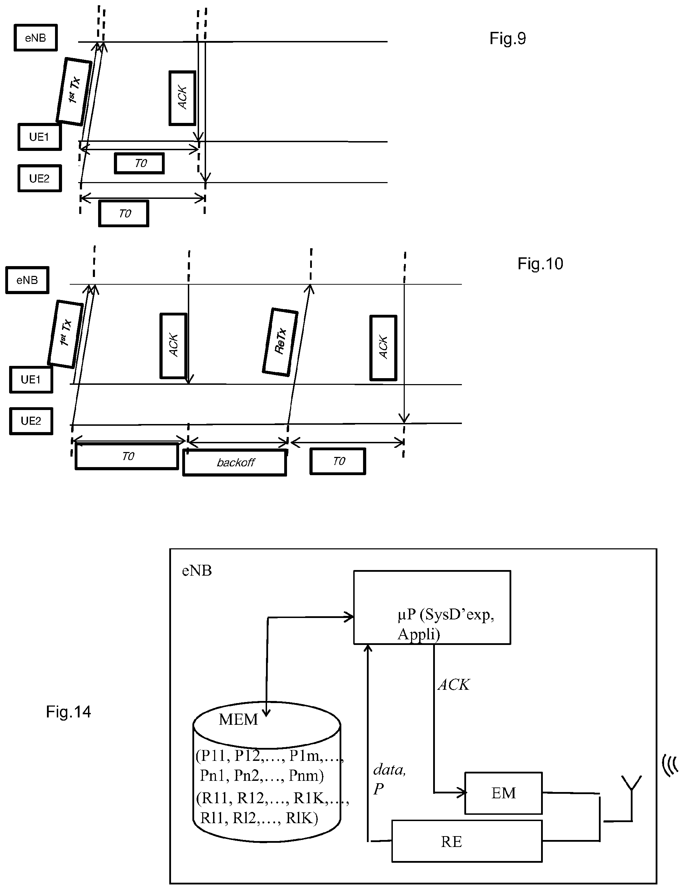

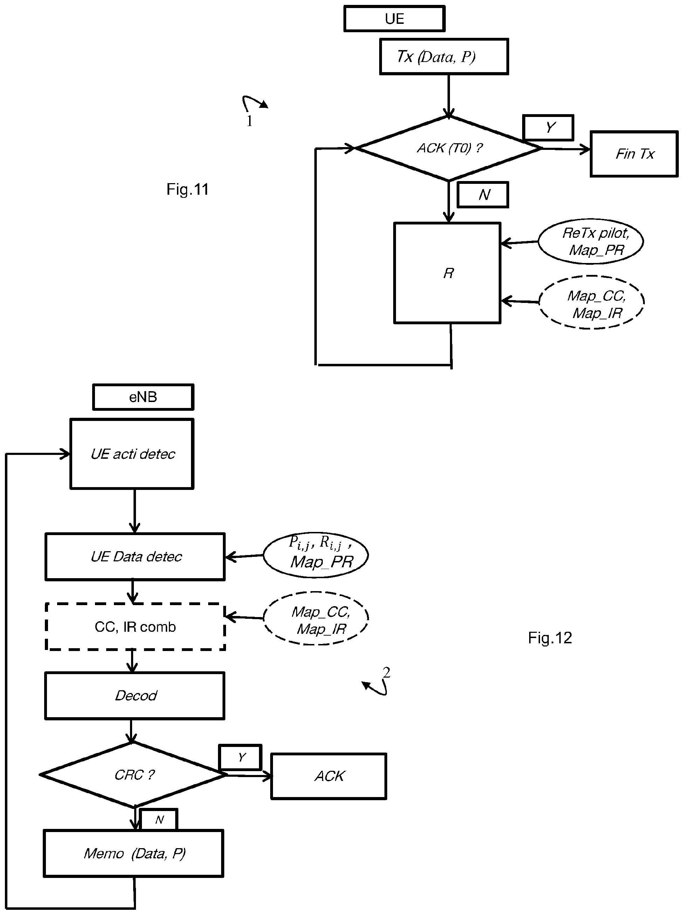

Le déroulement du procédé est illustré par les figures 9 et 10 et les organigrammes des figures 11 et 12. L'organigramme de la figure 11 schématise le déroulement du procédé 1 côté équipement de l'utilisateur. L'organigramme de la figure 12 schématise le déroulement du procédé 2 côté station de base.

Dans le cas illustré par la figure 9 deux utilisateurs UE1, UE2 sont actifs et transmettent *Tx* (*Data, P*) chacun une transmission initiale de type accord libre GF qui comprend un pilote *P* de la première liste.

La station de base eNB détecte *UE acti detec* une activité sur les ressources de la grille dédiée aux transmissions GF i.e. elle reçoit les données *Data* transmises au moyen de ces ressources par l'équipement d'un utilisateur. La station de base eNB détecte *UE Data detec* les pilotes *P* utilisés et détermine ainsi qu'il y a deux utilisateurs actifs et qu'il s'agit de transmissions initiales compte tenu que ces pilotes appartiennent à la première liste *P_{i,j}.*

La station de base eNB tente de décoder *Decod* les deux transmissions initiales de ces utilisateurs actifs transmises selon le protocole d'accord libre GF. Ce décodage comprend en général une détection *UE Data detec* des données *Data* reçues, un décodage canal pour chaque paquet de données reçu d'un utilisateur parmi les différents utilisateurs actifs. Au moyen d'un test du champ de vérification la station de base détermine si le décodage est correct *CRC ?, Y* et génère alors un signal d'acquiescement *ACK par utilisateur* ou détermine s'il n'est pas correct *CRC ?, N.*

En parallèle, chacun des utilisateurs actifs est en attente *ACK (T0) ?* du retour d'acquiescement *ACK* que doit lui adresser la station eNB si celle-ci décode correctement les données *Data* transmises.

Après exploitation du champ de vérification et si ce champ indique un décodage correct *CRC ?, Y,* la station de base eNB détermine l'identifiant des utilisateurs. Les données de chacune des deux transmissions initiales étant décodées avec succès, la station de base eNB émet un signal d'acquiescement *ACK* pour chacun des deux utilisateurs selon un cadencement déterminé *TO* conforme au cadencement des transmissions à accord libre GF.

L'utilisateur UE1, UE2, qui reçoit le signal d'acquiescement *ACK* en accord avec le cadencement *TO* n'effectue pas *Fin Tx* de retransmission des données transmises initialement.

Le cas illustré par la figure 10 diffère de celui illustré par la figure 9 en ce que seule la transmission initiale de l'utilisateur UE1 est correctement décodée par la station de base eNB. La station de base eNB n'a pas réussi *CRC ?, N* à décoder correctement la transmission initiale de l'utilisateur UE2, elle mémorise *Memo* (*Data, P*) les données initiales reçues de l'utilisateur UE2 avec le pilote *P* utilisé par cet utilisateur UE2. Seul l'utilisateur UE1 reçoit un signal d'acquiescement *ACK* selon le cadencement *TO* d'une transmission d'accord libre GF.

L'utilisateur UE2 ne reçoit pas de signal d'acquiescement *ACK* selon le cadencement déterminé *TO* pour une transmission d'accord libre GF. L'utilisateur UE2 en déduit qu'il doit effectuer une retransmission *R*. Compte tenu du pilote qu'il a utilisé pour la transmission initiale, l'utilisateur UE2 détermine le pilote de référence *ReTx pilot* conformément au mapping. Si plusieurs modes *CC, IR* de retransmission sont définis, l'utilisateur choisi un de ces modes. Sur la base du motif *Map_CC, Map_IR* associé à ce mode, l'utilisateur UE2 détermine le pilote à utiliser pour la première retransmission. L'utilisateur UE2 effectue sa retransmission ReTx après un intervalle de temps variable *backoff.*

L'utilisateur UE2 passe alors en attente *ACK (T0) ?* du retour d'acquiescement *ACK* que doit lui adresser la station eNB si celle-ci décode correctement les données transmises initialement avec l'aide des données retransmises.

La station de base eNB détecte *UE acti detec* une activité sur les ressources de la grille dédiées aux transmissions GF i.e. elle reçoit les données transmises au moyen de ces ressources.

La station de base eNB détecte *UE Data detec* le pilote utilisé. En comparant avec les listes *P_{i,j}, R_{i,j}* de pilotes, elle détermine qu'il s'agit d'une retransmission. En comparant avec le mapping *Map_PR* entre les listes, elle détermine que cette retransmission est à associer avec la transmission initiale de l'utilisateur UE2. En utilisant les motifs *Map_CC, Map_IR* elle détermine le mode de retransmission en comparant ces motifs avec le pilote reçu. La station de base eNB sait ainsi comment combiner *CC, IR comb* les données de la transmission initiale avec les données retransmises.

Si elle décode *Decod* avec succès *CRC ?, Y* les données combinées, la station de base eNB émet un signal d'acquiescement *ACK* pour l'utilisateur UE2 selon un cadencement déterminé *TO* conforme au cadencement des transmissions à accord libre GF. Si elle ne décode pas correctement *CRC ?, N* les données combinées, la station de base n'émet pas de signal d'acquiescement et le procédé boucle en attente de détection d'activité sur les ressources dédiées.

La structure simplifiée de l'équipement d'un utilisateur selon les modes de réalisation décrits ci-dessus est illustrée par la figure 13. Un tel équipement UE comprend un émetteur EM et un récepteur RE connectés à une antenne, une mémoire MEM comprenant une mémoire tampon (RAM par exemple), une unité *µ*P de traitement équipée par exemple d'un microprocesseur et pilotée par le programme d'ordinateur pour mettre en oeuvre le procédé 1 de télécommunication selon l'invention.

A l'initialisation, les instructions de code du programme d'ordinateur sont par exemple chargées dans la mémoire tampon avant d'être exécutées par le processeur de l'unité de traitement *µ*P. L'unité de traitement *µ*P reçoit en entrée des données Data préparées typiquement au niveau d'une couche MAC et issues par exemple d'une application voix ou d'une application locale à l'équipement telle qu'une requête Internet vers un site Web. L'unité de traitement *µ*P lit les deux listes de pilotes et le mappage entre les deux listes mémorisés dans la mémoire MEM. Le microprocesseur de l'unité de traitement *µ*P met en oeuvre les étapes du procédé 1 de télécommunication décrit précédemment, selon les instructions du programme d'ordinateur.

La structure simplifiée d'une station de base selon les modes de réalisation décrits ci-dessus est illustrée par la figure 14. Une telle station de base eNB comprend un émetteur EM et un récepteur RE connectés à une antenne, , une mémoire MEM comprenant une mémoire tampon (RAM par exemple), une unité *µ*P de traitement équipée par exemple d'un microprocesseur et pilotée par le programme d'ordinateur pour mettre en oeuvre le procédé 2 de télécommunication selon l'invention.

A l'initialisation, les instructions de code du programme d'ordinateur sont par exemple chargées dans la mémoire tampon avant d'être exécutées par le processeur de l'unité de traitement *µ*P. L'unité de traitement *µ*P reçoit en entrée des données *Data, P* reçues par l'antenne et traitées par le récepteur RE, . L'unité de traitement *µ*P lit les deux listes de pilotes et le mappage *Map_PR* entre les deux listes mémorisés dans la mémoire MEM. Le microprocesseur de l'unité de traitement *µ*P met en oeuvre les étapes du procédé 2 de télécommunication décrit précédemment, selon les instructions du programme d'ordinateur.

En conséquence, l'invention s'applique également à un programme d'ordinateur (ou ses différents modules répartis plus particulièrement entre un équipement utilisateur et une station de base), notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Procédé de télécommunication entre une station de base (eNB) et des utilisateurs (UE) tel qu'une transmission en voie montante est selon un accord libre, comprenant :
- identification de deux listes disjointes de pilotes (P11, P12,..., P1m,..., Pn1, Pn2,..., Pnm), (R11, R12,..., R1K,..., Rl1, Rl2,..., RlK) connues de la station de base et des utilisateurs dont une première pour des transmissions initiales en voie montante et une deuxième pour des retransmissions en voie montante,
- définition d'un premier mappage entre les pilotes des deux listes, un pilote de la deuxième liste mappé à un pilote de la première liste selon le premier mappage est dit pilote de référence (*ReTx pilot*)*,*
- sélection aléatoire d'un pilote (P7) de la première liste par un utilisateur lors d'une transmission initiale en voie montante, le pilote sélectionné permettant de déterminer selon le premier mappage le pilote de référence parmi les pilotes de la deuxième liste,
- définition de premiers motifs différents de relations entre des pilotes de la deuxième liste et le pilote de référence (R2) pour distinguer respectivement des modes de retransmission différents,
sélection d'un pilote (R3, R1) dans la deuxième liste par l'utilisateur lors d'une retransmission, ce pilote étant en relation selon un des premiers motifs avec le pilote de référence, et ce pilote correspondant au mode de la retransmission.

2. Procédé de télécommunication selon la revendication 1 selon lequel un des modes est un mode HARQ avec redondance incrémentale.

3. Procédé de télécommunication selon la revendication 1 selon lequel un des modes est un mode HARQ avec répétition.

4. Procédé de télécommunication selon l'une des revendications 1 à 3 selon lequel au moins deux retransmissions sont définies pour une même transmission, le procédé comprenant en outre un second motif définissant un second niveau de correspondance entre des pilotes de la deuxième liste.

5. Station de base (eNB) adaptée pour mettre en oeuvre un procédé de télécommunication entre la station de base (eNB) et des utilisateurs (UE) tel qu'une transmission en voie montante est selon un accord libre, comprenant un émetteur et un récepteur reliés à une antenne, un microprocesseur et une mémoire, **caractérisée en ce que** :
- la mémoire est adaptée pour mémoriser deux listes disjointes de pilotes connues des utilisateurs dont une première pour des transmissions initiales en voie montante et une deuxième pour des retransmissions en voie montante, pour mémoriser un premier mappage entre les pilotes des deux listes connu des utilisateurs, un pilote de la deuxième liste mappé à un pilote de la première liste selon le premier mappage est dit pilote de référence, et pour mémoriser des premiers motifs différents de relations, connus des utilisateurs, entre des pilotes de la deuxième liste et un pilote de référence pour distinguer respectivement des modes de retransmission différents,
- le microprocesseur est adapté pour comparer un pilote fourni par le récepteur après réception de données (*Data, P*) reçues par l'antenne avec les listes de pilotes mémorisées pour déterminer si les données reçues correspondent à une transmission initiale ou à une retransmission et, dans le cas d'une retransmission, pour comparer le pilote fourni aux premiers motifs pour identifier le mode de retransmission.

6. Equipement utilisateur (UE) adapté pour mettre en oeuvre un procédé de télécommunication tel qu'une transmission en voie montante vers une station de base est selon un accord libre, comprenant un émetteur et un récepteur reliés à une antenne, un microprocesseur et une mémoire, **caractérisée en ce que** :
- la mémoire est adaptée pour mémoriser deux listes disjointes de pilotes connues de la station de base dont une première pour des transmissions initiales en voie montante et une deuxième pour des retransmissions en voie montante, pour mémoriser un premier mappage entre les pilotes des deux listes connu de la station de base, un pilote de la deuxième liste mappé à un pilote de la première liste selon le premier mappage est dit pilote de référence et pour mémoriser des premiers motifs différents, connus de la station de base, de relations entre des pilotes de la deuxième liste et un pilote de référence pour distinguer respectivement des modes de retransmission différents,
- le microprocesseur est adapté pour sélectionner aléatoirement un premier pilote parmi la première liste de pilotes lors d'une transmission initiale en voie montante et pour contrôler l'émetteur pour transmettre un paquet de données comprenant le premier pilote sélectionné, le premier pilote sélectionné permettant de déterminer selon le premier mappage le pilote de référence parmi les pilotes de la deuxième liste et
- le microprocesseur est adapté pour sélectionner un deuxième pilote parmi la deuxième liste de pilotes, ce pilote étant en relation selon un des premiers motifs avec le pilote de référence,
- le microprocesseur est adapté pour attendre un signal d'acquiescement pendant une durée déterminée avant de contrôler l'émetteur pour la retransmission en voie montante du paquet de données comprenant le deuxième pilote, ce pilote correspondant au mode de la retransmission.

## Patentansprüche

1. Verfahren zur Telekommunikation zwischen einer Basisstation (eNB) und Benutzern (UE) derart, dass eine Uplink-Übertragung gemäß einer freien Zuteilung erfolgt, beinhaltend:
- Identifizieren von zwei getrennten Listen von Pilotträgern (P11, P12,..., P1m,..., Pn1, Pn2,..., Pnm), (R11, R12,..., R1K,..., Rl1, Rl2,..., RlK), die der Basisstation und den Benutzern bekannt sind, eine erste davon für Uplink-Erstübertragungen und eine zweite davon für Uplink-Neuübertragungen,
- Definieren einer ersten Zuordnung zwischen den Pilotträgern der zwei Listen, wobei ein Pilotträger der zweiten Liste, der gemäß der ersten Zuordnung einem Pilotträger der ersten Liste zugeordnet ist, als Referenzpilotträger (*ReTx pilot*) bezeichnet wird,
- zufälliges Auswählen eines Pilotträgers (P7) der ersten Liste durch einen Benutzer während einer Uplink-Erstübertragung, wobei es der ausgewählte Pilotträger gestattet, gemäß der ersten Zuordnung den Referenzpilotträger unter den Pilotträgern der zweiten Liste zu bestimmen,
- Definieren von unterschiedlichen ersten Beziehungsmustern zwischen Pilotträgern der zweiten Liste und dem Referenzpilotträger (R2), um jeweils unterschiedliche Neuübertragungsmodi zu unterscheiden, Auswählen eines Pilotträgers (R3, R1) in der zweiten Liste durch den Benutzer bei einer Neuübertragung, wobei dieser Pilotträger gemäß einem der ersten Muster mit dem Referenzpilotträger in Beziehung steht und dieser Pilotträger dem Neuübertragungsmodus entspricht.

2. Telekommunikationsverfahren nach Anspruch 1, wobei einer der Modi ein HARQ-Modus mit inkrementeller Redundanz ist.

3. Telekommunikationsverfahren nach Anspruch 1, wobei einer der Modi ein HARQ-Modus mit Wiederholung ist.

4. Telekommunikationsverfahren nach einem der Ansprüche 1 bis 3, wobei mindestens zwei Neuübertragungen für eine gleiche Übertragung definiert werden, wobei das Verfahren ferner ein zweites Muster beinhaltet, das eine zweite Übereinstimmungsebene zwischen Pilotträgern der zweiten Liste definiert.

5. Basisstation (eNB), die dazu angepasst ist, ein Telekommunikationsverfahren zwischen der Basisstation (eNB) und Benutzern (UE) derart umzusetzen, dass eine Uplink-Übertragung gemäß einer freien Zuteilung erfolgt, beinhaltend einen Sender und einen Empfänger, die mit einer Antenne, einem Mikroprozessor und einem Speicher verbunden sind, **dadurch gekennzeichnet, dass**:
- der Speicher dazu angepasst ist, zwei getrennte Listen von Pilotträgern, die den Benutzern bekannt sind, zu speichern, eine erste davon für Uplink-Erstübertragungen und eine zweite davon für Uplink-Neuübertragungen, eine erste Zuordnung zwischen den Pilotträgern der zwei Listen, die den Benutzern bekannt ist, zu speichern, wobei ein Pilotträger der zweiten Liste, der gemäß der ersten Zuordnung einem Pilotträger der ersten Liste zugeordnet ist, als Referenzpilotträger bezeichnet wird, und unterschiedliche erste Beziehungsmuster, die den Benutzern bekannt sind, zwischen Pilotträgern der zweiten Liste und einem Referenzpilotträger zu speichern, um jeweils unterschiedliche Neuübertragungsmodi zu unterscheiden,
- der Mikroprozessor dazu angepasst ist, einen Pilotträger, der durch den Empfänger nach dem Empfang von Daten (*Data, P*)*,* die durch die Antenne empfangen werden, bereitgestellt wird, mit den gespeicherten Pilotträgerlisten zu vergleichen, um zu bestimmen, ob die empfangenen Daten einer Erstübertragung oder einer Neuübertragung entsprechen, und, im Fall einer Neuübertragung, den bereitgestellten Pilotträger mit den ersten Mustern zu vergleichen, um den Neuübertragungsmodus zu identifizieren.

6. Benutzerausrüstung (UE), die dazu angepasst ist, ein Telekommunikationsverfahren derart umzusetzen, dass eine Uplink-Übertragung an eine Basisstation gemäß einer freien Zuteilung erfolgt, beinhaltend einen Sender und einen Empfänger, die mit einer Antenne, einem Mikroprozessor und einem Speicher verbunden sind, **dadurch gekennzeichnet, dass**:
- der Speicher dazu angepasst ist, zwei getrennte Listen von Pilotträgern, die der Basisstation bekannt sind, zu speichern, eine erste davon für Uplink-Erstübertragungen und eine zweite davon für Uplink-Neuübertragungen, eine erste Zuordnung zwischen den Pilotträgern der zwei Listen, die der Basisstation bekannt ist, zu speichern, wobei ein Pilotträger der zweiten Liste, der gemäß der ersten Zuordnung einem Pilotträger der ersten Liste zugeordnet ist, als Referenzpilotträger bezeichnet wird, und unterschiedliche erste Beziehungsmuster, die der Basisstation bekannt sind, zwischen Pilotträgern der zweiten Liste und einem Referenzpilotträger zu speichern, um jeweils unterschiedliche Neuübertragungsmodi zu unterscheiden,
- der Mikroprozessor dazu angepasst ist, während einer Uplink-Erstübertragung zufällig einen ersten Pilotträger aus der ersten Liste von Pilotträgern auszuwählen und den Sender so anzusteuern, dass dieser ein Datenpaket, das den ausgewählten ersten Pilotträger beinhaltet, überträgt, wobei es der ausgewählte erste Pilotträger gestattet, gemäß der ersten Zuordnung den Referenzpilotträger unter den Pilotträgern der zweiten Liste zu bestimmen, und
- der Mikroprozessor dazu angepasst ist, einen zweiten Pilotträger aus der zweiten Liste von Pilotträgern auszuwählen, wobei dieser Pilotträger gemäß einem der ersten Muster mit dem Referenzpilotträger in Beziehung steht,
- der Mikroprozessor dazu angepasst ist, während eines bestimmten Zeitraums auf ein Zustimmungssignal zu warten, bevor er den Sender zur Uplink-Neuübertragung des Datenpakets, das den zweiten Pilotträger beinhaltet, ansteuert, wobei dieser Pilotträger dem Neuübertragungsmodus entspricht.

## Claims

1. Method for telecommunication between a base station (eNB) and users (UE) such that an uplink transmission is grant-free, comprising:
- identifying two disjoint lists of pilots (P11, P12, ..., P1m, ..., Pn1, Pn2, ..., Pnm), (R11, R12, ..., R1K, ..., Rl1, Rl2, ..., RlK), which lists are known to the base station and to the users, a first of which is for initial uplink transmissions and a second of which is for uplink retransmissions,
- defining a first mapping between the pilots of the two lists, a pilot of the second list mapped to a pilot of the first list according to the first mapping being referred to as a reference pilot (*ReTx pilot*)*,*
- a user randomly selecting a pilot (P7) of the first list during an initial uplink transmission, the selected pilot making it possible to determine, according to the first mapping, the reference pilot among the pilots of the second list,
- defining different first patterns of relationships between pilots of the second list and the reference pilot (R2) in order to distinguish different respective retransmission modes,
- the user selecting a pilot (R3, R1) from the second list during a retransmission, this pilot being in a relationship, according to one of the first patterns, with the reference pilot, and this pilot corresponding to the mode of the retransmission.

2. Telecommunication method according to Claim 1, according to which one of the modes is an incremental redundancy HARQ mode.

3. Telecommunication method according to Claim 1, according to which one of the modes is a repeat HARQ mode.

4. Telecommunication method according to one of Claims 1 to 3, according to which at least two retransmissions are defined for the same transmission, the method further comprising a second pattern defining a second level of correspondence between pilots of the second list.

5. Base station (eNB) adapted to implement a method for telecommunication between the base station (eNB) and users (UE) such that an uplink transmission is grant-free, comprising a transmitter and a receiver which are linked to an antenna, a microprocessor and a memory, which is **characterized in that**:
- the memory is adapted to store two disjoint lists of pilots, which lists are known to the users, a first of which is for initial uplink transmissions and a second of which is for uplink retransmissions, to store a first mapping between the pilots of the two lists which is known to the users, a pilot of the second list mapped to a pilot of the first list according to the first mapping being referred to as a reference pilot, and to store different first patterns of relationships, known to the users, between pilots of the second list and a reference pilot in order to distinguish different respective retransmission modes,
- the microprocessor is adapted to compare a pilot provided by the receiver after reception of data (*Data, P*) which are received by the antenna with lists of pilots, which lists are stored in order to determine whether the received data correspond to an initial transmission or to a retransmission and, in the case of a retransmission, to compare the provided pilot with the first patterns in order to identify the retransmission mode.

6. User equipment (UE) adapted to implement a telecommunication method such that an uplink transmission to a base station is grant-free, comprising a transmitter and a receiver which are linked to an antenna, a microprocessor and a memory, which is **characterized in that**:
- the memory is adapted to store two disjoint lists of pilots, which lists are known to the base station, a first of which is for initial uplink transmissions and a second of which is for uplink retransmissions, to store a first mapping between the pilots of the two lists which is known to the base station, a pilot of the second list mapped to a pilot of the first list according to the first mapping being referred to as a reference pilot, and to store different first patterns, known to the base station, of relationships between pilots of the second list and a reference pilot in order to distinguish different respective retransmission modes,
- the microprocessor is adapted to randomly select a first pilot from the first list of pilots during an initial uplink transmission and to control the transmitter so as to transmit a data packet comprising the first selected pilot, the first selected pilot making it possible to determine, according to the first mapping, the reference pilot among the pilots of the second list and
- the microprocessor is adapted to select a second pilot from the second list of pilots, this pilot being in a relationship, according to one of the first patterns, with the reference pilot,
- the microprocessor is adapted to await an acknowledgement signal for a determined duration before controlling the transmitter for the uplink retransmission of the data packet comprising the second pilot, this pilot corresponding to the mode of the retransmission.
